# FASCICULE DE BREVET EUROPEEN

(11) **EP 3 472 919 B1**
(45) Date de publication et mention de la délivrance du brevet: **25.03.2020**
(21) Numéro de dépôt: 17734793.7
(22) Date de dépôt: 09.06.2017
(51) Int. Cl.: B60L 53/16, B65H 75/26, B65H 75/40, B65H 75/44, H02G 11/02, H02J 7/00

(54) **DISPOSITIF PORTATIF DE DÉVIDAGE D'UN CÂBLE ÉLECTRIQUE, NOTAMMENT UN CÂBLE DE CHARGE POUR UN VÉHICULE ÉLECTRIQUE OU HYBRIDE**
TRAGBARE VORRICHTUNG ZUR AUSGABE EINES STROMKABELS, INSBESONDERE EINES LADEKABELS FÜR EIN ELEKTRO- ODER HYBRIDFAHRZEUG
PORTABLE DEVICE FOR PAYING OUT AN ELECTRIC CABLE, PARTICULARLY A CHARGING CABLE FOR AN ELECTRIC OR HYBRID VEHICLE

(30) Priorité: 15.06.2016 FR 1655562
(43) Date de publication de la demande: 24.04.2019
(73) Titulaire: Renault S.A.S., 92100 Boulogne-Billancourt (FR)
(72) Inventeur: BUFFETAUD, Julien, 91320 Wissous (FR)
(86) Numéro de dépôt international: PCT/FR2017/051477
(87) Numéro de publication internationale: WO 2017/216454

(56) Documents cités:
- DE-U1- 8 526 244
- US-A- 4 150 798
- US-A1- 2013 099 042
- US-A1- 2014 034 382

## Description

La présente invention concerne un dispositif portatif de dévidage d'un câble électrique, notamment un câble de charge pour un véhicule électrique ou hybride.

Dans le contexte actuel de consensus autour du réchauffement climatique, la diminution des émissions de dioxyde de carbone (CO₂) est un défi majeur auquel sont confrontés les constructeurs automobiles, les normes étant toujours plus exigeantes en la matière.

Outre l'amélioration constante des rendements des moteurs thermiques classiques, qui s'accompagne d'une baisse des émissions de CO₂, les véhicules électriques (« EV » d'après la terminologie anglo-saxonne « Electric Vehicle ») et les véhicules hybrides thermique-électrique (« HEV » d'après la terminologie anglo-saxonne « Hybrid Electric Vehicle ») sont aujourd'hui considérés comme la solution la plus prometteuse pour diminuer les émissions de CO₂.

Différentes technologies de stockage de l'énergie électrique ont été testées dans les dernières années afin de répondre aux besoins des EV. Il apparaît aujourd'hui que les batteries à cellules lithium-ion (Li-ion) sont celles susceptibles de fournir le meilleur compromis entre la densité de puissance, qui favorise les performances en termes d'accélération notamment, et la densité d'énergie, qui favorise l'autonomie. Cependant, l'utilisation de cette technologie Li-ion pour constituer des batteries de traction pour EV n'est pas sans poser de nombreuses difficultés, notamment si l'on considère les niveaux de tension nécessaires aux bornes de la batterie, de l'ordre de 400 volts (V), ou encore les niveaux de puissance de recharge nécessaires, de l'ordre de 2 à 3 kilowatts-heure en charge lente pendant plusieurs heures, jusqu'à plusieurs dizaines de kilowatts-heure en charge rapide pendant quelques dizaines de minutes. A de tels niveaux de puissance de charge, le câble de charge lui-même est soumis à de fortes contraintes.

La solution la plus connue, qui est également la plus simple, est de fournir un câble de charge « volant » de section large adaptée à la puissance de charge maximale envisagée, que l'on transporte dans le coffre du véhicule. Le principal inconvénient de cette solution est que, durant les phases de charge, le câble traine par terre et se salit. Donc, soit l'utilisateur le replie proprement (ce qui peut s'avérer compliqué compte-tenu de sa section importante) avant de le ranger dans son coffre et il se salit les mains, soit il le pose en vrac dans le coffre et il y a un risque non négligeable qu'il doive le démêler lorsqu'il en aura à nouveau besoin. Se salir les mains semble donc inévitable, et il s'agit là d'un inconvénient que la présente invention se propose de résoudre.

Pour éviter cet inconvénient, il est connu de l'état de la technique, notamment de la demande de brevet US2015/0008878A1, un dispositif de stockage d'un câble de charge comportant un dévidoir muni d'une manivelle pour dérouler et enrouler le câble, ainsi que d'une poignée pour transporter le dispositif. Il comporte également un boîtier de contrôle de la charge, intégré au centre du dévidoir, qui permet de piloter une charge lente sur prise standard. Un inconvénient majeur de cette solution est le risque d'échauffement. En effet, à des niveaux de puissance élevés pour charge rapide, les problèmes d'échauffement ne se limitent pas à la batterie : tous les éléments conducteurs impliqués dégagent une grande quantité de chaleur par effet joule et il est nécessaire de prendre en compte ce phénomène lors de la conception de l'ensemble de l'architecture électrique du véhicule. Ainsi, non seulement le câble de charge reliant le véhicule à la borne de charge doit être choisi de section suffisamment importante, mais il doit également être agencé d'une manière permettant d'évacuer la chaleur de manière contrôlée. Ce n'est manifestement pas le cas d'une solution par enroulement comme dans US2015/0008878A1, où le câble est non seulement enroulé de manière serrée, mais en plus il est enfermé, ce qui empêche tout phénomène de refroidissement par convexion.

Le document US 4 150 798 A divulgue un dispositif portatif de dévidage d'un câble électrique, comprenant un support et un couvercle enfermant, en collaboration avec le support, la partie du câble accueillie dans le sillon, le couvercle comportant une ouverture. En outre, le document DE 85 26 244 U1 divulgue un curseur qui est apte à se déplacer selon une direction axiale, le curseur comportant des moyens de guidage du câble. En outre, le document US 2014/034382 A1 divulgue un câble électrique pour fournir de l'énergie à un véhicule, avec une gaine de câble, à l'intérieur de laquelle sont prévus au moins deux conducteurs électriques, qui sont connectés à au moins un connecteur se trouvant à une extrémité du câble. La gaine de câble est conçue de manière à ce que le câble soit tenu avec une force de rappel dans une position de repos, dans laquelle le câble forme une spirale et est orienté le long d'une surface plane ou courbée. De plus, le document US 2013/099042 A1 divulgue un dispositif comportant une première pluralité de rouleaux disposés selon un motif hélicoïdal gauche, une deuxième pluralité de rouleaux en dessous de la première pluralité de rouleaux et agencés selon un motif hélicoïdal droit, une troisième pluralité de rouleaux disposés dans une configuration en S, un guide configuré pour se déplacer verticalement, le guide étant agencé sur un premier côté de la première pluralité de rouleaux, et une pince configurée pour se déplacer verticalement, la troisième pluralité de rouleaux étant disposée entre la première et la deuxième pluralité de rouleaux, et la pince étant disposée sur un second côté de la première pluralité de rouleaux.

L'invention a notamment pour but de surmonter les inconvénients précités, notamment ceux liés aux salissures et au risque d'échauffement. A cet effet, l'invention a pour objet un dispositif portatif de dévidage d'un câble électrique comportant un élément de connexion à chacune de ses extrémités. Le dispositif comporte un support dans lequel est creusé un sillon formant une spirale plate, le sillon étant apte à accueillir au moins partiellement le câble. Il comporte également un couvercle enfermant, en collaboration avec le support, la partie du câble accueillie dans le sillon. Le couvercle comporte une ouverture dans laquelle est apte à se déplacer un curseur selon une direction radiale à la spirale. Le curseur comporte des moyens de guidage du câble au travers de l'ouverture. Le support, le couvercle et le curseur sont agencés de telle sorte que la mise en rotation du couvercle et du curseur par rapport au support autour de l'axe de la spirale entraîne, dans un sens de rotation, le déplacement du curseur dans la direction opposée à l'axe de la spirale, ledit déplacement provoquant l'insertion, par les moyens de guidage au travers de l'ouverture, du câble dans le sillon sous le couvercle. Ils sont également agencés de telle sorte que la mise en rotation du couvercle et du curseur par rapport au support autour de l'axe de la spirale entraîne, dans l'autre sens de rotation, le déplacement du curseur dans la direction de l'axe de la spirale, ledit déplacement provoquant l'extraction, par les moyens de guidage au travers de l'ouverture, du câble hors du sillon et au-dessus du couvercle.

Avantageusement, l'ouverture peut comporter deux bords parallèles à la direction radiale à la spirale et le curseur peut comporter deux glissières aptes à coulisser le long des deux bords respectivement.

Avantageusement, le dispositif peut comporter une poignée solidaire du support et le curseur peut comporter un téton de préhension, de sorte que le couvercle et le curseur soient aptes à être mis en rotation par l'intermédiaire du téton, en retenant simultanément le support par l'intermédiaire de la poignée.

Par exemple, les moyens de guidage du câble au travers de l'ouverture peuvent inclure un conduit de section sensiblement discale.

Par exemple, le support pouvant avoir au moins deux faces dont l'une porte le sillon, un orifice peut être percé dans le support à proximité de l'extrémité du sillon située au plus près du centre de la spirale, le câble pouvant passer au travers de l'orifice d'une face à l'autre du support.

Par exemple, le support peut comporter, sur sa face ne portant pas le sillon, au moins un élément de clipsage pour y bloquer le câble (13).

Avantageusement, le support peut comporter un pivot cylindrique ayant pour axe l'axe de la spirale, et le couvercle peut comporter une ouverture discale ayant également pour axe l'axe de la spirale, le pivot pouvant être emboîté dans l'ouverture discale, de telle sorte que le couvercle et le curseur soient aptes à être mis en rotation par rapport au support autour de l'axe de la spirale.

Par exemple, le support et le couvercle peuvent avoir une forme sensiblement discale. Le support (12) et le couvercle (17) peuvent alors avoir sensiblement le même diamètre.

La présente invention a également pour objet un tel dispositif portatif de dévidage d'un câble électrique pour charger un véhicule électrique ou hybride.

Outre de limiter les salissures et de faciliter le refroidissement du câble, le dispositif selon l'invention a pour principal avantage son ergonomie en termes de poids et d'encombrement.

D'autres caractéristiques et avantages de l'invention apparaîtront à l'aide de la description qui suit faite en regard de dessins annexés 1, 2, 3, et 5, qui illustrent des vues schématiques d'ensemble, et des dessins annexés 4a, 4b et 4c, qui illustrent des vues schématiques en coupe, d'un même mode de réalisation avantageux de l'invention. Les éléments identiques illustrés sur ces figures partagent les mêmes références. Toutefois, pour des raisons de clarté, toutes les références n'ont pas été reportées sur toutes les figures.

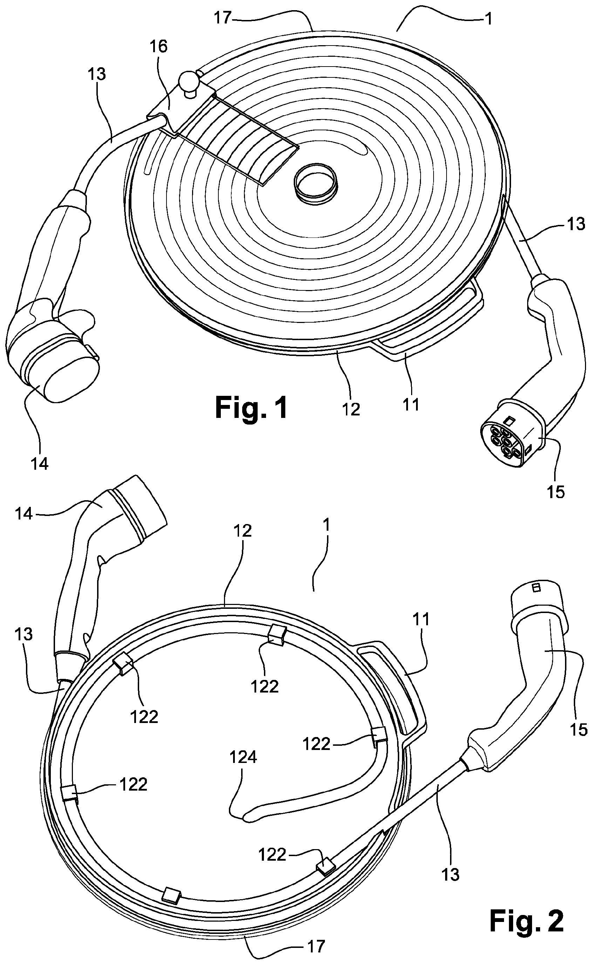

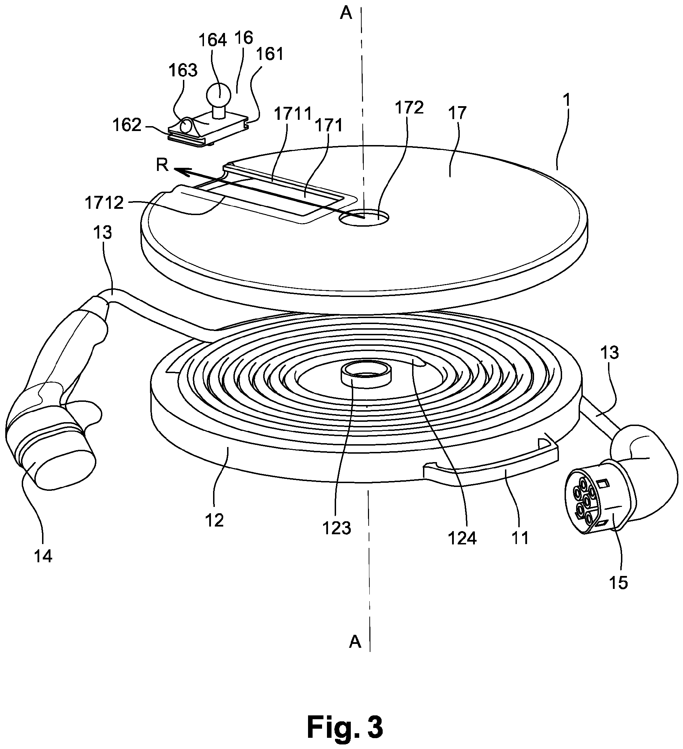

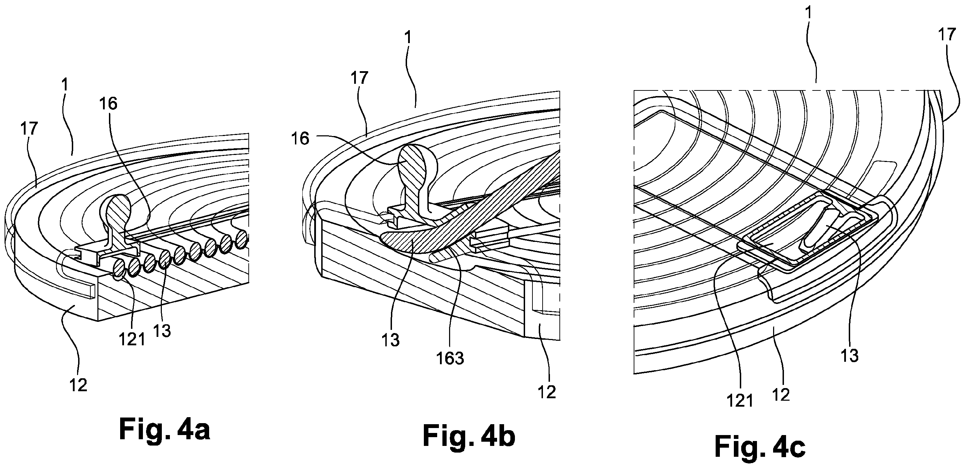

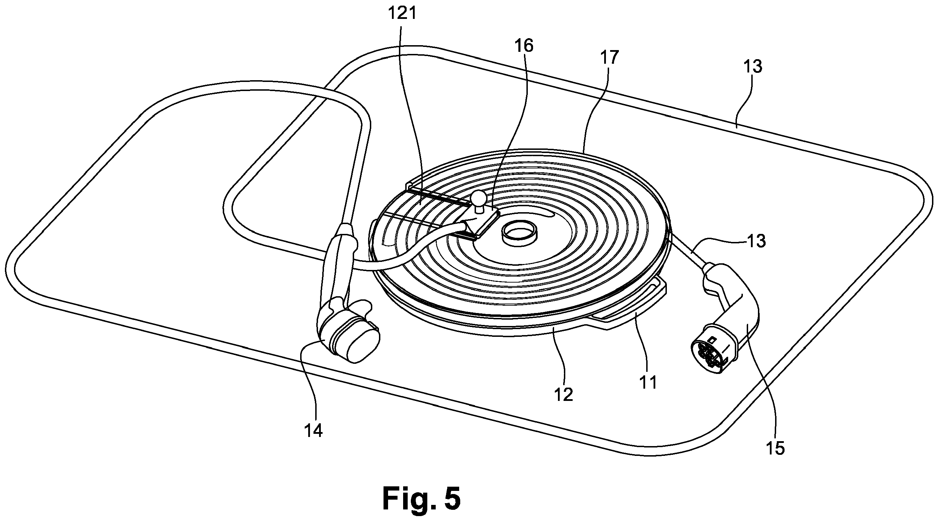

Les figures illustrent un même dispositif 1 selon l'invention pour recharger un véhicule électrique ou hybride. Les figures 1 et 2 illustrent, selon deux points de vue opposés, ce dispositif 1 dans une configuration de rangement. La figure 5 illustre de dispositif 1 dans une configuration d'utilisation. Comme bien illustré par la figure 3, qui est une vue non-fonctionnelle en éclaté du dispositif 1, celui-ci comporte une poignée 11 fixée à un support 12 pour un câble 13. Dans le présent exemple de réalisation, le support 12 présente une forme plate sensiblement discale. Comme bien illustré à la figure 4a, le support 12 comporte sur l'une de ses faces (appelée « face avant » par la suite), un sillon 121 en forme de spirale d'Archimède (appelée « spirale plate » par la suite), le sillon 121 pouvant accueillir le câble 13 dans une configuration de rangement. Un orifice 124 est percé au travers du support 12 à l'extrémité du sillon 121 située au plus près du centre de la spirale, le câble 13 traversant le support 12 par cet orifice 124. Comme bien illustré à la figure 2, le support 12 comporte en outre sur son autre face (appelée « face arrière » par la suite) des doigts de clipsage 122 disposés à proximité de toute sa périphérie, les doigts de clipsage 122 accueillant le câble 13 de telle sorte qu'il ne puisse pas y coulisser. Le dispositif 1 comporte également un couvercle 17 de forme sensiblement discale permettant de fermer le support discal 12 sur sa face avant portant le sillon 121, de sorte que le support 12 et son couvercle 17 partagent un même axe de symétrie A. Il faut noter que l'axe A est également l'axe de la spirale plate formée par le sillon 121. Dans le présent exemple de réalisation, le couvercle 17 est fait d'un matériau translucide laissant visible la partie du câble 13 insérée dans le sillon 121. Dans le présent exemple de réalisation, le couvercle 17 comporte en son centre une ouverture discale 172, qui est complémentaire d'un pivot cylindrique 123 disposé au centre du support 12, le pivot 123 étant emboîté dans l'ouverture 172 de telle sorte que le couvercle 17 est apte à pivoter autour du pivot 123. Le couvercle 17 comporte en outre une ouverture 171 de forme rectangulaire dont deux bords opposés 1711 et 1712 sont orientés sensiblement selon un même vecteur R radial au couvercle discal 17 et à la spirale plate formée par le sillon 121. Ces deux bords 1711 et 1712 sont aptes à guider des glissières 161 et 162 d'un curseur 16. Ce curseur 16 comporte par ailleurs un téton sphérique de préhension 164. Aux deux extrémités du câble 13 sont disposées une fiche mâle 14 (équipée d'un capot de protection dans le présent exemple) et une fiche mâle 15 pour connexion à un véhicule électrique et à une borne de charge respectivement.

La figure 4a montre, dans la configuration de rangement, le câble 13 accueilli sur sensiblement toute sa longueur dans le sillon 121 en forme de spirale creusé dans le support 12. Le sillon 121 présente une section de forme semi-discale de diamètre sensiblement identique au diamètre extérieur du câble 13, de sorte que le câble 13 soit accueilli dans le sillon 121 sur la moitié de sa section. Comme mieux illustré par les vues en coupe des figures 4a, 4b et 4c, le câble 13 traverse le curseur 16 par un conduit 163 de section sensiblement discale aménagé spécialement à cet effet au travers du curseur 16. Le diamètre du conduit 163 doit permettre au câble 13 d'y coulisser sans retenue.

Ainsi, en prenant à pleine main la poignée 11, il suffit d'entraîner le téton 164 du curseur 16 dans un mouvement de rotation autour de l'axe A de la spirale, en pinçant le téton 164 entre le pouce et l'index de l'autre main.

Dans un sens de rotation, en vue de raccorder le véhicule à une borne de charge (configuration dite « de charge » illustrée par la figure 5), le curseur 16 force l'extraction du câble 13 hors du sillon 121 sur toute sa longueur, ceci sous l'action conjuguée du câble 13 qui coulisse dans le conduit 163 et des glissières 161 et 162 qui coulissent le long des bords 1711 et 1712 respectivement, en se rapprochant de l'axe A de la spirale. En adaptant la longueur de câble 13 extraite du sillon 121, on peut aisément limiter voire empêcher le câble 13 de traîner par terre, et donc éviter de se salir les mains. En tous les cas, même s'il traine par terre, il ne sera pas nécessaire de toucher le câble 13 au moment de le ranger après la charge, il suffira alors d'actionner le curseur 16 dans l'autre sens de rotation, comme explicité ci-après.

Dans l'autre sens de rotation, en vue de ranger le dispositif 1 dans le coffre du véhicule par exemple (configuration dite « de rangement » illustrée par la figure 1), le curseur 16 force l'insertion du câble 13 dans du sillon 121 sur toute sa longueur, ceci toujours sous l'action conjuguée du câble 13 qui coulisse dans le conduit 163 et des glissières 161 et 162 qui coulissent le long des bords 1711 et 1712 respectivement, mais cette fois en s'éloignant de l'axe A de la spirale. Dans cette configuration de rangement, le dispositif 1 selon l'invention peut très facilement être déposé dans le coffre d'un véhicule.

L'exemple de réalisation ci-dessus n'est donné qu'à titre d'illustration, l'invention étant applicable à tout appareil électrique nécessitant d'être branché périodiquement à une prise de courant.

Le dispositif selon l'invention a encore pour avantage d'être très léger et simple de conception, donc fiable et peu coûteux. En particulier, tous ses éléments peuvent être faits de matériaux plastiques (sauf les éléments conducteurs du câble, bien-sûr). Avantageusement, le dispositif selon l'invention permet de dérouler le câble à la longueur voulue, et ainsi d'empêcher le câble de trainer par terre entre le véhicule et la prise de charge. Il est également ergonomique grâce à sa poignée, dans le sens où son utilisation ne nécessite pas de se salir les mains et où il offre un encombrement limité : on peut le ranger facilement dans le coffre d'un véhicule sans pénaliser le volume utile pour les bagages. Enfin, le câble est relativement bien aéré sur toute sa longueur et peut ainsi refroidir par simple convexion naturelle. De plus, le support et le couvercle peuvent être aisément ajourés, afin d'optimiser le refroidissement par convexion naturelle du câble.

## Revendications

1. Dispositif (1) portatif de dévidage d'un câble électrique (13) comportant un élément de connexion (14, 15) à chacune de ses extrémités, le dispositif comprenant :
- un support (12) dans lequel est creusé un sillon (121) formant une spirale plate, le sillon étant apte à accueillir au moins partiellement le câble, et ;
- un couvercle (17) enfermant, en collaboration avec le support, la partie du câble accueillie dans le sillon, le couvercle comportant une ouverture (171) dans laquelle est apte à se déplacer un curseur (16) selon une direction (R) radiale à la spirale, le curseur comportant des moyens de guidage du câble au travers de l'ouverture ;
le support, le couvercle et le curseur étant agencés de telle sorte que la mise en rotation du couvercle et du curseur par rapport au support autour de l'axe (A) de la spirale entraîne :
- dans un sens de rotation, le déplacement du curseur dans la direction opposée à l'axe de la spirale, ledit déplacement provoquant l'insertion, par les moyens de guidage au travers de l'ouverture, du câble dans le sillon sous le couvercle ;
- dans l'autre sens de rotation, le déplacement du curseur dans la direction de l'axe de la spirale, ledit déplacement provoquant l'extraction, par les moyens de guidage au travers de l'ouverture, du câble hors du sillon et au-dessus du couvercle.

2. Dispositif selon la revendication 1, **caractérisé en ce que** :
- l'ouverture (171) comporte deux bords (1711, 1712) parallèles à la direction (R) radiale à la spirale ;
- le curseur (16) comporte deux glissières (161, 162) aptes à coulisser le long desdits deux bords respectivement.

3. Dispositif selon la revendication 1, **caractérisé en ce que** :
- il comporte une poignée (11) solidaire du support (12) ;
- le curseur (16) comporte un téton de préhension (164) ;
de sorte que le couvercle et le curseur sont aptes à être mis en rotation par l'intermédiaire du téton, en retenant simultanément le support par l'intermédiaire de la poignée.

4. Dispositif selon la revendication 1, **caractérisé en ce que** les moyens de guidage du câble (13) au travers de l'ouverture (171) incluent un conduit (163) de section sensiblement discale.

5. Dispositif selon la revendication 1, **caractérisé en ce que**, le support (12) ayant au moins deux faces dont l'une porte le sillon (121), un orifice (124) est percé dans le support à proximité de l'extrémité du sillon située au plus près du centre de la spirale, le câble (13) passant au travers de l'orifice d'une face à l'autre du support.

6. Dispositif selon la revendication 5, **caractérisé en ce que** le support (12) comporte, sur sa face ne portant pas le sillon (121), au moins un élément de clipsage (122) pour y bloquer le câble (13).

7. Dispositif selon la revendication 1, **caractérisé en ce que** :
- le support (12) comporte un pivot cylindrique (123) ayant pour axe l'axe (A) de la spirale, et ;
- le couvercle (17) comporte une ouverture discale (172) ayant également pour axe l'axe de la spirale ;
le pivot étant emboîté dans l'ouverture discale, de telle sorte que le couvercle et le curseur (16) sont aptes à être mis en rotation par rapport au support autour de l'axe de la spirale.

8. Dispositif selon la revendication 1, **caractérisé en ce que** le support (12) et le couvercle (17) ont une forme sensiblement discale.

9. Dispositif selon la revendication 8, **caractérisé en ce que** le support (12) et le couvercle (17) ont sensiblement le même diamètre.

10. Dispositif (1) portatif de dévidage d'un câble électrique (13) de charge d'un véhicule électrique ou hybride selon l'une quelconque des revendications précédentes.

## Patentansprüche

1. Tragbare Vorrichtung (1) zur Ausgabe eines Stromkabels (13), das an jedem seiner Enden ein Verbindungselement (14, 15) umfasst,
wobei die Vorrichtung Folgendes beinhaltet:
- einen Träger (12), in den eine Rille (121), die eine flache Spirale bildet, eingebracht ist, wobei die Rille fähig ist, das Kabel mindestens teilweise aufzunehmen, und;
- einen Deckel (17), der zusammen mit dem Träger den in der Rille aufgenommenen Teil des Kabels einschließt, wobei der Deckel eine Öffnung (171) umfasst, in der sich ein Schieber (16) in einer zu der Spirale radial verlaufenden Richtung (R) bewegen kann, wobei der Schieber Mittel zum Führen des Kabels durch die Öffnung hindurch umfasst;
wobei der Träger, der Deckel und der Schieber so angeordnet sind, dass das Drehen des Deckels und des Schiebers mit Bezug auf den Träger um die Achse (A) der Spirale Folgendes bewirkt:
- in einer Drehrichtung, die Bewegung des Schiebers in der der Achse der Spirale entgegengesetzten Richtung, wobei die Bewegung dazu führt, dass das Kabel mit Hilfe der Führungsmittel durch die Öffnung hindurch in die Rille unter den Deckel eingeführt wird;
- in der anderen Drehrichtung, die Bewegung des Schiebers in der Richtung der Achse der Spirale, wobei die Bewegung dazu führt, dass das Kabel mit Hilfe der Führungsmittel durch die Öffnung hindurch aus der Rille hinaus und über den Deckel geleitet wird.

2. Vorrichtung nach Anspruch 1, **dadurch gekennzeichnet, dass**:
- die Öffnung (171) zwei Kanten (1711, 1712), die zu der zu der Spirale radial verlaufenden Richtung (R) parallel sind, umfasst;
- der Schieber (16) zwei Gleitschienen (161, 162) umfasst, die fähig sind, jeweils entlang der zwei Kanten zu gleiten.

3. Vorrichtung nach Anspruch 1, **dadurch gekennzeichnet, dass**:
- sie einen fest am Träger (12) angebrachten Griff (11) umfasst;
- der Schieber (16) einen Greifansatz (164) umfasst; sodass der Deckel und der Schieber mit Hilfe des Ansatzes gedreht werden können, wobei gleichzeitig der Träger mit Hilfe des Griffs gehalten wird.

4. Vorrichtung nach Anspruch 1, **dadurch gekennzeichnet, dass** die Mittel zum Führen des Kabels (13) durch die Öffnung (171) hindurch einen Kanal (163) mit einem im Wesentlichen scheibenförmigen Querschnitt umfassen.

5. Vorrichtung nach Anspruch 1, **dadurch gekennzeichnet, dass**, während der Träger (12) mindestens zwei Seiten aufweist, von denen eine die Rille (121) trägt, ein Loch (124) in der Nähe des Endes der Rille, das der Mitte der Spirale am nächsten ist, in den Träger gebohrt ist, wobei das Kabel (13) durch das Loch hindurch von einer Seite des Trägers zu der anderen verläuft.

6. Vorrichtung nach Anspruch 5, **dadurch gekennzeichnet, dass** der Träger (12) auf seiner Seite, die nicht die Rille (121) trägt, mindestens ein Klemmelement (122) umfasst, um das Kabel (13) darin zu fixieren.

7. Vorrichtung nach Anspruch 1, **dadurch gekennzeichnet, dass**:
- der Träger (12) einen zylindrischen Zapfen (123) umfasst, der als Achse die Achse (A) der Spirale aufweist, und;
- der Deckel (17) eine scheibenförmige Öffnung (172) umfasst, die ebenfalls die Achse der Spirale als Achse aufweist;
wobei der Zapfen so in die scheibenförmige Öffnung eingepasst ist, dass der Deckel und der Schieber (16) mit Bezug auf den Träger um die Achse der Spirale gedreht werden können.

8. Vorrichtung nach Anspruch 1, **dadurch gekennzeichnet, dass** der Träger (12) und der Deckel (17) eine im Wesentlichen scheibenförmige Form aufweisen.

9. Vorrichtung nach Anspruch 8, **dadurch gekennzeichnet, dass** der Träger (12) und der Deckel (17) im Wesentlichen denselben Durchmesser aufweisen.

10. Tragbare Vorrichtung (1) zur Ausgabe eines Stromkabels (13) zum Laden eines Elektro- oder Hybridfahrzeugs nach einem der vorhergehenden Ansprüche.

## Claims

1. Portable device (1) for paying out an electric cable (13) comprising a connection element (14, 15) at each of the ends thereof, which device comprises:
- a support (12) in which there is recessed a groove (121) which forms a flat spiral, the groove being capable of at least partially receiving the cable, and;
- a cover (17) which encloses, together with the support, the portion of the cable which is received in the groove, the cover comprising an opening (171) in which a sliding member (16) is capable of moving in a radial direction (R) relative to the spiral, the sliding member comprising means for guiding the cable through the opening;
the support, the cover and the sliding member being arranged so that the rotation of the cover and the sliding member relative to the support about the axis (A) of the spiral brings about:
- in one rotation direction, the movement of the sliding member in the opposite direction to the axis of the spiral, said movement bringing about the insertion, via the means for guiding through the opening, of the cable into the groove below the cover;
- in the other rotation direction, the movement of the sliding member in the direction of the axis of the spiral, said movement bringing about the extraction, via the means for guiding through the opening, of the cable out of the groove and above the cover.

2. Device according to Claim 1, **characterized in that**:
- the opening (171) comprises two edges (1711, 1712) which are parallel with the radial direction (R) relative to the spiral;
- the sliding member (16) comprises two sliding rails (161, 162) which are capable of sliding along said two edges, respectively.

3. Device according to Claim 1, **characterized in that**:
- it comprises a handle (11) which is fixedly joined to the support (12);
- the sliding member (16) comprises a gripping pin (164) ;
so that the cover and the sliding member are capable of being rotated via the pin, simultaneously retaining the support via the handle.

4. Device according to Claim 1, **characterized in that** the means for guiding the cable (13) through the opening (171) include a conduit (163) having a substantially disk-like cross-section.

5. Device according to Claim 1, **characterized in that**, the support (12) having at least two faces, of which one carries the groove (121), a hole (124) is pierced in the support close to the end of the groove located closest to the center of the spiral, the cable (13) passing through the hole from one face to the other of the support.

6. Device according to Claim 5, **characterized in that** the support (12) comprises, on the face thereof which does not carry the groove (121), at least one clip-fitting element (122) for blocking the cable (13) at that location.

7. Device according to Claim 1, **characterized in that**:
- the support (12) comprises a cylindrical pivot (123) which has as an axis the axis (A) of the spiral, and;
- the cover (17) comprises a disk-like opening (172) which also has as an axis the axis of the spiral;
the pivot being nested in the disk-like opening so that the cover and the sliding member (16) are capable of being caused to rotate relative to the support about the axis of the spiral.

8. Device according to Claim 1, **characterized in that** the support (12) and the cover (17) have a substantially disk-like shape.

9. Device according to Claim 8, **characterized in that** the support (12) and the cover (17) have substantially the same diameter.

10. Portable device (1) for paying out an electric cable (13) for charging an electric or hybrid vehicle according to one of the preceding claims.
